# NEUE EUROPÄISCHE PATENTSCHRIFT

(11) **EP 1 592 529 B2**
(45) Veröffentlichungstag und Bekanntmachung des Hinweises auf die Entscheidung über den Einspruch: **09.03.2011**
(45) Hinweis auf die Patenterteilung: 10.05.2006
(21) Anmeldenummer: 04732312.6
(22) Anmeldetag: 12.05.2004
(51) Int. Cl.: B23F 21/22

(54) **STABMESSER ZUM FRÄSEN VON SPIRALKEGEL- UND HYPOIDRÄDERN**
BAR BLADE FOR MILLING SPIRAL BEVEL GEARS AND HYPOID GEARS
LAME A BARRE POUR FRAISER DES ENGRENAGES CONIQUES A DENTURES HELICOIDALES ET DES ENGRENAGES HYPOIDES

(30) Priorität: 22.05.2003 DE 10323751
(43) Veröffentlichungstag der Anmeldung: 09.11.2005
(73) Patentinhaber: Klingelnberg GmbH, 42499 Hückeswagen (DE)
(72) Erfinder: RIBBECK, Karl Martin, 42897 Remscheid (DE)
(74) Vertreter: Menges, Rolf
(86) Internationale Anmeldenummer: PCT/EP2004/005105
(87) Internationale Veröffentlichungsnummer: WO 2004/103624

(56) Entgegenhaltungen:
- EP-A1- 0 085 176
- DE-A1- 2 600 187
- DE-A1- 2 636 479
- DE-T2- 69 405 978
- GB-A- 109 607
- SU-A1- 1 505 694
- US-A- 1 236 834
- US-A- 1 383 707
- US-A- 1 667 299
- US-A- 1 686 054
- US-A- 1 727 740
- US-A- 1 964 799
- US-A- 1 980 365
- US-A- 2 091 575
- US-A- 4 530 623
- US-A- 4 575 285
- US-A- 5 480 343
- US-A- 6 120 217

## Beschreibung

Die Erfindung betrifft ein profilgeschärftes oder profilgeschärftes und zusätzlich formgeschliffenes Stabmesser nach dem Oberbegriff des Patentansprüches.

Es ist aus der DE 694 05 978 T2 bekannt, dass bei einem sogenannten "profilgeschärften" Stabmesser die Kopffläche und die beiden Freiflächen geschliffen werden, um das Messer zu überholen und nachzuschärfen. Die Spanfläche wird bei dieser Art von Stabmesser bei der Schärfung nicht geschliffen. Solche profilgeschärften Stabmesser können dazu verwendet werden, Material von der Außenseite oder konkaven Flanke einer Zahnlücke abzutragen (Außenmesser), von der Innenseite oder konvexen Flanke einer Zahnlücke (Innenmesser) und/oder von dem Zahnlückengrund (Vorschneider). Hingegen werden bei einem sogenannten "profilgeschärften und formgeschliffenen" Stabmesser während des Schärfens die Kopffläche, die beiden Freiflächen und die Spanfläche geschliffen.

Aus der US 1 667 299 aus dem Jahre 1928 ist ein sogenanntes Formmesser bekannt, das zum Schärfen nur an der Spanfläche nachgeschliffen wird. Nach der vorgenannten Definition handelt es sich bei einem Formmesser um ein sogenanntes "formgeschliffenes" Messer. Ein solches Formmesser oder formgeschliffenes Messer ist kein Stabmesser, sondern hat einen kurzen Schaft, der in Richtung quer zur Messerlängsachse möglichst breit gehalten wird, weil bei dem Nachschleifen eines solchen Messers der Abschliff in Richtung quer zur Messerlängsachse erfolgt. Die für das Nachschleifen nutzbare Profillänge wird durch die Dicke des Formmessers quer zur Messerlängsachse festgelegt. Das Profil des Formmessers ist fest und kann beim Nachschärfen nicht verändert werden. An den beiden seitlichen Freiflächen ist das Formmesser bogenförmig hinterschliffen. Verschiedene Eingriffswinkel werden durch entsprechend grob gestufte Messer erreicht. Ausgehend von einem gewählten Freiwinkel an der Kopfschneide und dem erforderlichen Hinterschliff ergibt sich die Form der Freiflächen zwangsweise. Die Gestaltungsmöglichkeiten hinsichtlich eines technologisch vorteilhaften Frei- und Spanwinkels sind somit stark eingeschränkt.

Aus dem Aufsatz "Spiral- und Hypoidkegelräder nach dem Spiroflex-Verfahren", Erich Kotthaus, DE-Zeitschrift Werkstatt und Betrieb, 1967, S. 602 - 606, ergibt sich dazu zusätzlich Folgendes. Bei einem Formmesser muss der Tangens des Flankenfreiwinkels gleich dem Tangens des Normal-Eingriffswinkels mal dem Tangens des Kopffreiwinkels sein. Zum Schleifen wird der Messerkopf mit den eingespannten Formmessern auf eine besondere Schärfmaschine genommen, und die Formmesser werden einzeln im Teilkopf an den Spanflächen nachgeschliffen, bis die Verschleißmarken an den Schneidkanten abgebaut sind. Um möglichst viele Zähne pro Messer schneiden zu können, muss die nutzbare Profillänge groß sein. Der Platzbedarf eines Messers auf dem Umfang des Messerkopfes ist also abhängig von der Profillänge am Messer und dem Zwischenraum zwischen zwei benachbarten Formmessern, der erforderlich ist, um den Durchlass der zum Schärfen benötigten Schleifscheibe sicher zu stellen. Je größer dieser Platzbedarf ist, umso geringer wird die Leistungsfähigkeit des Messerkopfes, da sich dann auf dem gleichen Umfang weniger Formmesser unterbringen lassen und somit pro Zeiteinheit weniger Schnitte ausgeführt werden.

Formmesser wie das aus dem Jahre 1928 schneiden zwar in einem Fräsdurchgang die komplette Zahnlücke, aus zerspanungstechnischen und qualitativen Gründen wurden sie jedoch bereits einige Jahre nach ihrer Einführung durch eine Formmessergruppe mit Innen- und Außenmessern ersetzt, wie sie dann jahrzehntelang bei der Herstellung von Spiralkegel- und Hypoidrädern eingesetzt worden ist (siehe US 2 024 494 aus dem Jahre 1935 und Gear Handbook, D.W. Dudley, McGraw-Hill, 1962, S. 20 - 24 und 20 - 25). Die US 2 024 494 beschreibt einen Messerkopf mit alternierenden Innen- und Außenmessern, mit dem sich beide Kegelradflanken einer Zahnlücke mit den gleichen Maschineneinstelldaten in einem Schnitt fertigstellen lassen. Erst in einer Zeit nach 1960 sind diese seit 1935 üblichen Formmessergruppen, bestehend aus mindestens einem Formmesser zum Schneiden der konkaven Flanke und einem Formmesser zum Schneiden der konvexen Flanke, jeweils durch eine Gruppe aus mindestens zwei Stabmessern ersetzt worden. Die Gründe dafür und die mit Stabmessergruppen erzielbaren Vorteile sind in dem vorgenannten Aufsatz "Spiral- und Hypoidkegelräder nach dem Spiroflex-Verfahren" anschaulich beschrieben. Dabei besteht jede Stabmessergruppe aus zwei Fertigschneidern (einem für die konkave und einem für die konvexe Flankenfläche), denen jeweils ein Schruppmesser als Vorschneider zugeordnet ist. Die zusammengehörenden Vor- und Fertigschneider werden in einer gemeinsamen Nut aufgenommen. Das Einspannen zweier Messer in einer Nut sowie der kleine Schaftquerschnitt dieser Stabmesser erlauben eine wesentlich dichtere Messerfolge als Formmesser.

Nach aktuellem Stand der Technik werden Kegelradfräswerkzeuge nach wie vor in Form von Stabmessern eingesetzt. Die Stabmesser werden in HSS (Hochleistungsschnellstahl)- oder HM(Hartmetall)-Ausführung zum Einsatz gebracht. Bei der Bearbeitung von Kegelrädern in einem Fräsdurchgang werden in einem Messerkopf zwei verschiedene Schneidenprofilausführungen von Stabmessern eingesetzt. Die Stabmesser mit der einen Schneidenprofilausführung bearbeiten mit der am Außendurchmesser angeordneten Schneide die konkave Zahnflanke (Außenmesser). Stabmesser mit dieser Profilausführung haben eine besondere Schneidengeometrie, welche im Allgemeinen zu einem positiven Spanwinkel führt. Die Definition für einen positiven oder negativen Spanwinkel findet sich beispielsweise in DIN 6581, Mai 1966, S. 8, Bild 13. Die Stabmesser mit der zweiten Schneidenprofilausführung bearbeiten mit der am Innendurchmesser angeordneten Schneide die konvexe Zahnflanke (Innenmesser). Stabmesser mit dieser Schneidenprofilausführung haben ebenfalls eine besondere, aber andere Schneidengeometrie, welche ebenfalls im Allgemeinen zu einem positiven Spanwinkel führt. Es besteht die Möglichkeit, einen oder zwei Vorschneider zusätzlich zu den zuvor beschriebenen Stabmessern einzusetzen.

Die Anzahl der auf einem Messerkopf positionierbaren Stabmesser ist begrenzt. Durch die im Stand der Technik verwendete Stabmessergeometrie müssen immer im Wechsel mindestens zwei verschiedene Geometrieausführungen in den Messerkopf eingesetzt werden. Hierbei kann immer nur die Hälfte der Messer an der Erzeugung der jeweiligen Zahnflankenendgeometrie beteiligt werden.

Bei dem sogenannten Oerlikon-Verfahren zur Kegelradherstellung ist der Messerkopf mit mehreren Messergruppen aus jeweils drei Stabmessern bestückt. Jede Gruppe umfasst einen Außenschneider, einen Innenschneider und einen Vorschneider. An jedem Oerlikon-Stabmesser werden an dem Schneidenende wenigstens eine Spanfläche und zwei seitliche Freiflächen nachgeschliffen. Solche Messer werden als 3-Flankenschliff- oder 3FS-Messer oder - nach der obigen Definition - als profilgeschärfte und zusätzlich formgeschliffene Stabmesser bezeichnet. Weitere Einzelheiten zu dem Oerlikon-Verfahren finden sich beispielsweise in der Beschreibungseinleitung der DE 196 24 685 C1.

Bei einem Verfahren nach der EP 0 203 085 B1 werden Stabmesser eingesetzt, bei denen das Profil so ausgeführt ist, dass der Vorschneider entfallen kann. Eine Stabmessergruppe besteht daher lediglich aus zwei Stabmessern, weshalb mehr Stabmessergruppen als bei dem vorgenannten Oerlikon-Verfahren auf einem Messerkopf untergebracht werden können. Diese Stabmesser werden nur an zwei Flächen in Schaftrichtung nachgeschliffen, so dass die Spanfläche dieser Messer mit einer nach dem Schärfen nicht mehr notwendigerweise zu erneuernden Beschichtung versehen werden kann, die die Standzeit der Messer verlängert. Solche Messer werden als 2-Flankenschliff- oder 2FS-Messer oder - nach der obigen Definition - als profilgeschärfte Stabmesser bezeichnet.

Messerköpfe, bei denen alle Stabmesser auf einem Kreis so angeordnet sind, dass abwechselnd ein Stabmesser die konkave Flanke und das nächste Stabmesser die konvexe Flanke von ein und derselben Zahnlücke bearbeitet, werden in dem sogenannten Einzelteilverfahren eingesetzt. Bei diesem Verfahren wird in einem Fräsdurchgang eine Zahnlücke so lange bearbeitet, bis die Endgeometrie hergestellt ist. Dann wird um eine Zahnlücke geteilt und anschließend im nächsten Fräsdurchgang die nächste Zahnlücke bearbeitet. Hingegen werden Messerköpfe, bei denen die Stabmesser gruppenweise angeordnet sind, bei dem sogenannten kontinuierlichen Verfahren eingesetzt, bei dem eine Messergruppe in einer Zahnlücke die konvexe und die konkave Zahnflanke bearbeitet und anschließend die nächste Messergruppe in die nächste Zahnlücke eindringt und dort die beiden Zahnflanken bearbeitet. Einzelheiten hierzu finden sich beispielsweise in Handbook of Bevel and Hypoid Gears, Hermann J. Stadtfeld, Rochester Institute of Technology, 1993, S. 35.

Den vorstehend beschriebenen bekannten Verfahren ist gemeinsam, dass zum Bearbeiten einer Zahnlücke stets mindestens zwei Stabmesser benötigt werden, deren Schneidenprofil so ausgebildet ist, dass die Messer gemeinsam in der Lage sind, eine komplette Endgeometrie bei einem Fräsdurchgang zu erzeugen. Darüber hinaus ist das richtige Positionieren der einzelnen Stabmesser einer Messergruppe in einem Messerkopf kritisch und aufwendig.

Bei dem Stabmesser nach der eingangs bereits erwähnten DE 694 05 978 T2 handelt sich um ein profilgeschärftes Stabmesser, das mit seiner Haupt- oder ersten Schneide als Außen- oder Innenmesser eingesetzt wird, trotzdem aber an der Spanfläche im Bereich seiner Nebenschneide eine zweite Schneide aufweist. Zur Erzielung der zweiten Schneide wird in der Spanfläche ein Schlitz hergestellt, der die besagte zweite Schneide bildet, welcher ein Spanwinkel zugeordnet ist, der sich von dem Spanwinkel der ersten Schneide unterscheidet. Die zweite Schneide schneidet einen Abschnitt des Zahnlückengrundes sowie einen Abschnitt der Flanke, die derjenigen Flanke gegenüberliegt, welche durch die erste Schneide geschnitten wird. Aus der DE 694 05 978 T2 geht nicht ohne weiteres hervor, warum dieser Aufwand mit der zweiten Schneide betrieben wird. Diese Druckschrift nimmt aber ausdrücklich auf die US 4 575 285 Bezug. In dieser US-Patentschrift wird von einem Stand der Technik ausgegangen, bei dem eine Messergruppe aus drei Messern besteht, nämlich einem Innenmesser, einem Außenmesser und einem zusätzlichen Messer als Vorschneider für den Zahnlückengrund. Durch die zweite Schneide, die mit Hilfe des Schlitzes erzeugt wird, wird jedes Innen- und Außenmesser in die Lage versetzt, nicht nur die zugeordnete Flanke zu schneiden, sondern auch einen Abschnitt der gegenüberliegenden Flanke und einen Abschnitt des Zahnlückengrundes. Dadurch soll der Vorschneider eingespart und die Messergruppe auf zwei Messer reduziert werden. Es werden also weiterhin zwei Messer pro Gruppe benötigt, um eine Zahnlücke mit der kompletten Endgeometrie erzeugen zu können.

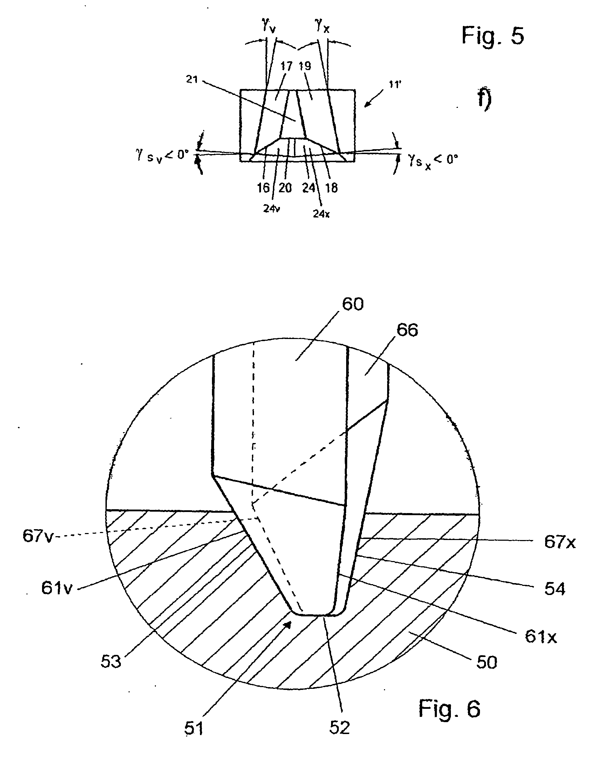

Die beigefügte Fig. 6 zeigt den Eingriff einer aus einem Außenmesser 60 und einem Innenmesser 66 bestehenden Messergruppe in eine Zahnlücke 51. Das Außenmesser 60 hat eine Hauptschneide 61v und eine der Hauptschneide 61v gegenüberliegende Nebenschneide 61x.Das Innenmesser 66 hat eine Hauptschneide 67x und eine der Hauptschneide 67x gegenüberliegende Nebenschneide 67v. Das Außenmesser 60 bearbeitet mit seiner Hauptschneide 61v eine erste Flanke 53 der späteren Zahnlücke 51, um dieser die Endgeometrie zu geben. Mit seiner Nebenschneide 61x bearbeitet dieses Messer zugleich auch eine der ersten Flanke 53 gegenüberliegende, in Fig. 6 nicht dargestellte weitere Flanke. Letztere gehört aber nicht zu der Zahnlücke 51 mit der Endgeometrie, sondern ist eine Zwischenflanke, die zum Erleichtern der Arbeit der Hauptschneide 67x des in der Gruppe sich anschließenden Innenmessers 66 dient, welche eine der ersten Flanke 53 gegenüberliegende zweite Flanke 54 der Zahnlücke 51 mit der Endgeometrie bearbeitet. Die bei dem profilgeschärften Stabmesser nach der DE 694 05 978 T2 vorhandene zweite Schneide kann also allenfalls den Schneidvorgang der Nebenschneide etwas verbessern, da sie einen Spanwinkel aufweist, der sich von dem negativen Spanwinkel der Nebenschneide unterscheidet und bei dem in der DE 694 05 978 T2 dargestellten Ausführungsbeispiel 0° beträgt.

Ein Stabmesser nach dem Oberbegriff des Patentanspruchs ist aus der US 4530623 bekannt. Dieses Stabmesser ist so gestaltet, dass mit ein und demselben Stabmesser in einem Fräsdurchgang eine Zahnlücke mit der kompletten Endgeometrie erzeugbar ist. Zu diesem Zweck hat dieses bekannte Stabmesser zwei Spanflächen, die stufenförmig versetzt hintereinander angeordnet und gegeneinander geneigt sind. Beim Auftreffen des Stabmessers auf einen Zahnradrohling wird ein Span erzeugt. Dringt das Messer tiefer in den Zahnradrohling ein, so werden zwei Späne erzeugt - einer im Wesentlichen an der einen Spanfläche, ein weiterer im Wesentlichen an der anderen Spanfläche. Der Grund dafür ist, dass die um eine Stufe räumlich versetzt hintereinander angeordneten beiden Spanflächen jeweils eine Schneide bilden. Die beiden Schneiden haben jeweils einen positiven Spanwinkel. Mit dem Messerkopf nach der US 4530623 wird eine angestrebte Steigerung der Schneidleistung durch einen durch dieses Stabmesser ermöglichten größeren Vorschub erzielt. Dabei werden mehrere Späne erzeugt.

Aufgabe der Erfindung ist es, ein Stabmesser der eingangs genannten Art zu schaffen, mit dem sich das Positionieren der Messer in einem Messerkopf vereinfachen und die Bearbeitung von Kegelrädern wesentlich effektiver durchführen lässt.

Die Aufgabe ist ausgehend von einem Stabmesser der eingangs genannten Art erfindungsgemäß durch ein Stabmesser mit den im kennzeichnenden Teil des Patentanspruchs angegebenen Merkmalen gelöst.

Nach der Erfindung ist auf einem einzelnen voll schneidenden Stabmesser ein Schneidenprofil vorgesehen, welches das Messer in die Lage versetzt, jede Zahnlücke in einem Fräsdurchgang mit einer kompletten Endgeometrie zu erzeugen. Das gesamte in die Zahnlücke eindringende Schneidenprofil des Stabmessers (außen und innen liegende Schneiden und eine Kopfschneide) erzeugt die Verzahnungsendgeometrie. Die Anzahl der an der Erzeugung der Zahnradoberfläche aktiv beteiligten Schneiden kann hierdurch bei gleichem Messerkopf verdoppelt werden. Das pro erfindungsgemäßem Stabmesser abgetragene Spanvolumen kann ebenfalls deutlich erhöht werden, da das gesamte in die Zahnlücke eindringende Profil an der Zerspanung beteiligt wird. Der Verschleiß des einzelnen Stabmessers sinkt, da an jedem Messer Verschleiß auf dem kompletten in die Zahnlücke eindringenden Profil entsteht. Es verringert sich das pro Schneide abzutragende Spanvolumen je Zahnrad, wodurch sich die Standmenge je Messerkopfbestückung erhöht. Das einzelne Stabmesser nach der Erfindung ist in einem Messerkopf einfacher positionierbar als ein Messerpaar oder eine Messergruppe.

Im Stand der Technik nach der o.g. DE 694 05 978 T2 wird von dem Stabmesser nur eine Flanke bearbeitet. Auf der gegenüberliegenden Seite besteht zwischen dem Stabmesser und der benachbarten Zahnflanke ein Freiraum. Der Späneflug ist stets auf diesen Freiraum gerichtet, so dass die Tendenz besteht, dass die Späne in den Freiraum gelangen und zwischen Zahnrad und Stabmesser gequetscht werden und dadurch die Zahnflanke beschädigt wird.

Die Schneidengeometrie des erfindungsgemäßen Stabmessers führt zu einem veränderten Späneflug, welcher sich positiv auf die Flankenoberflächen auswirkt. Durch das vollkommene Umschließen der Zahnlücke durch das in die Zahnlücke eindringende Schneidenprofil des Stabmessers nach der Erfindung wird ein Quetschen des Spanes in einen Freiraum zwischen Zahnflanke und Stabmesser verhindert.

Das Stabmesser nach der Erfindung kann sowohl für das Wälzverfahren als auch für das Formverfahren eingesetzt werden.

Weiter kann das Stabmesser nach der Erfindung sowohl für die Schrupp- als auch für die Schlichtbearbeitung eingesetzt werden.

Das Stabmesser nach der Erfindung kann ein Schneidenprofil haben, bei dem die Spanfläche und/oder Freiflächen beliebig gekrümmt sein können.

Die Schneidenprofilausführung des Stabmessers nach der Erfindung führt zu sehr geringen Spanwinkeln der Schneiden und hierdurch zu hohen Schnittkräften. Der Einsatz des Stabmessers nach der Erfindung erfolgt daher zweckmäßig auf modernen NC-Wälzfräsmaschinen.

Das Einsatzgebiet des voll schneidenden Stabmessers nach der Erfindung ist vorzugsweise das Einzelteilverfahren.

Bei dem Einsatz des Stabmessers nach der Erfindung können alle auf dem Messerkopf eingesetzten Stabmesser an der Erzeugung der kompletten Endgeometrie der Zahnlücken beteiligt werden. Das bietet den Vorteil, dass gegenüber einem Stand der Technik wie dem nach der DE 694 05 978 T2 die Bearbeitungszeit deutlich (bis zu 50 %) reduziert werden kann. Weiter ergibt sich ein deutlich geringerer Verschleiß des einzelnen Stabmessers nach der Erfindung.

Es können hierdurch neue Messerköpfe mit ungeraden Nutenzahlen zum Einsatz gebracht werden. Im Stand der Technik werden nämlich üblicherweise Messerköpfe mit geraden Nutenzahlen zum Einsatz gebracht, weil Messergruppen mit Stabmessern mit zwei unterschiedlichen Profilausführungen eingesetzt werden.

Da bei dem Stabmesser nach der Erfindung das Schneidenprofil durch den Schnitt von ein und derselben Spanfläche mit wenigstens den beiden Freiflächen und der Kopffläche gebildet ist, lässt sich, ungeachtet dessen, ob es sich bei dem Stabmesser nach der Erfindung um ein profilgeschärftes oder um ein profilgeschärftes und zusätzlich formgeschliffenes Stabmesser handelt, dessen Schneidenprofil am einfachsten herstellen.

Da bei Verwendung des Stabmessers nach der Erfindung auf einem Messerkopf alle Messer absolut die gleiche Schneidengeometrie haben können, vereinfacht sich die Messerlogistik enorm. Ebenfalls können das Messerumlaufvolumen und die damit verbundenen Kosten deutlich reduziert werden.

Ausführungsbeispiele der Erfindung werden im Folgenden unter Bezugnahme auf die Zeichnungen näher beschrieben. Es zeigt
- Fig. 1: als ein nicht zur Erfindung gehörendes erstes Ausführungsbeispiel des Stabmessers ein 2-Flankenschliff- oder profilgeschärftes Stabmesser in Vorderansicht (Fig. 1a), in Seitenansicht (Fig. 1b) und in Draufsicht (Fig. 1c),
- Fig. 2: als ein nicht zur Erfindung gehörendes zweites Ausführungsbeispiel des Stabmessers ein 3-Flankenschliff- oder profilgeschärftes und formgeschliffenes Stabmesser mit nachzuschleifender Spanfläche in Vorderansicht (Fig. 2a), in Seitenansicht (Fig. 2b) und in Draufsicht (Fig. 2c),
- Fig. 3: als ein drittes Ausführungsbeispiel des Stabmessers ein 3-Flankenschliff- oder profilgeschärftes und formgeschliffenes Stabmesser nach der Erfindung, bei dem die nachzuschleifende Spanfläche anders als bei der Ausführungsform nach Fig. 2 angeordnet ist, in Vorderansicht (Fig. 3a) und in Draufsicht (Fig. 3b),
- Fig. 4: als ein nicht zur Erfindung gehörendes viertes Ausführungsbeispiel des Stabmessers ein 3-Flankenschliff- oder profilgeschärftes und formgeschliffenes Stabmesser mit nachzuschleifender Spanfläche, die im Gegensatz zu den anderen Ausführungsformen konkav gekrümmt ausgebildet ist, in Vorderansicht (Fig. 4a) und in Draufsicht (Fig. 4b),

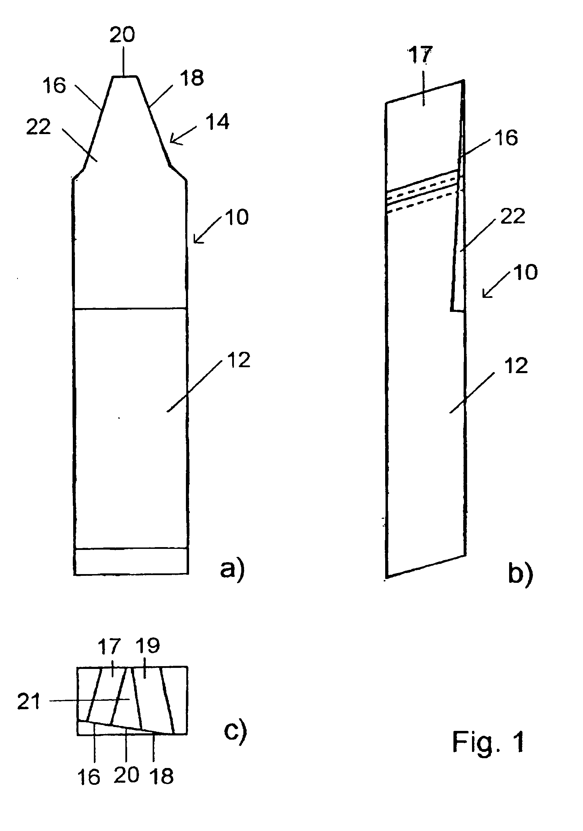

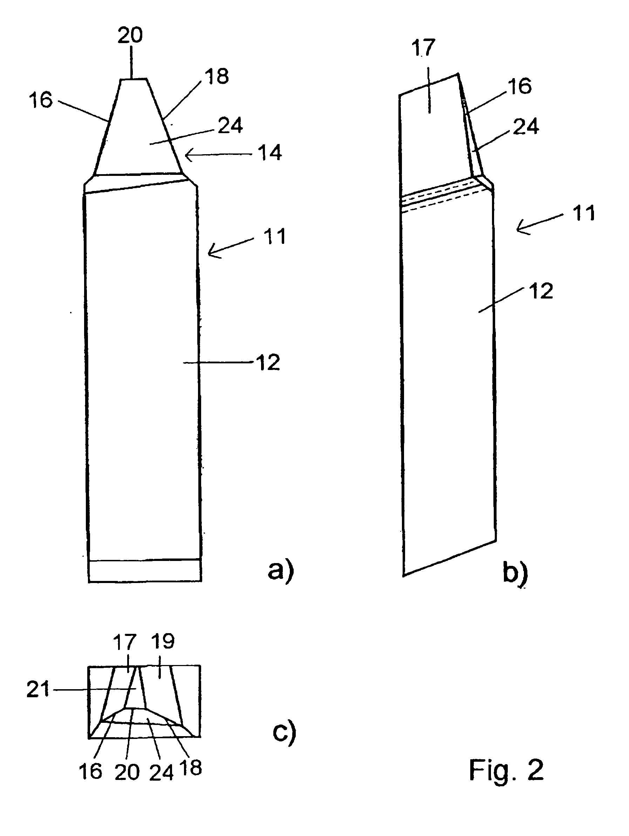

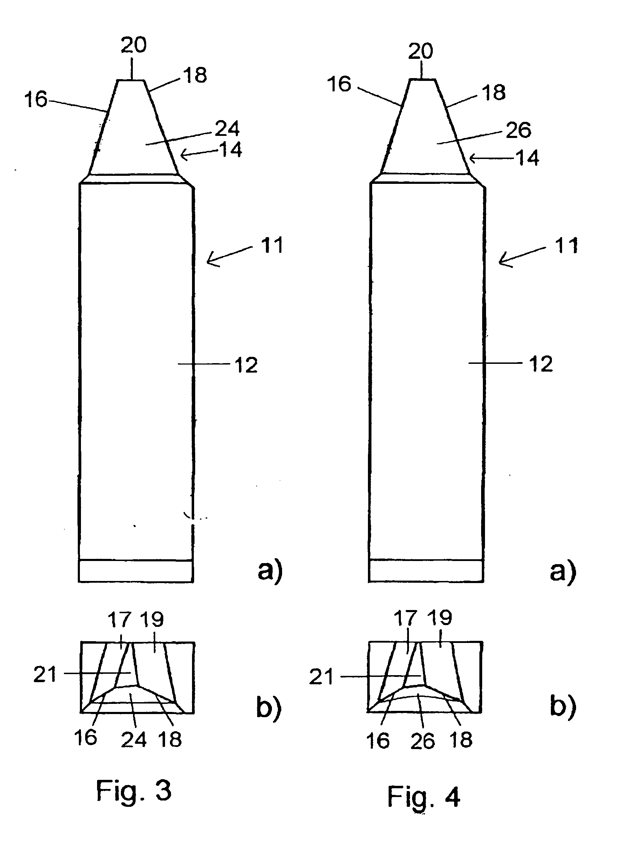

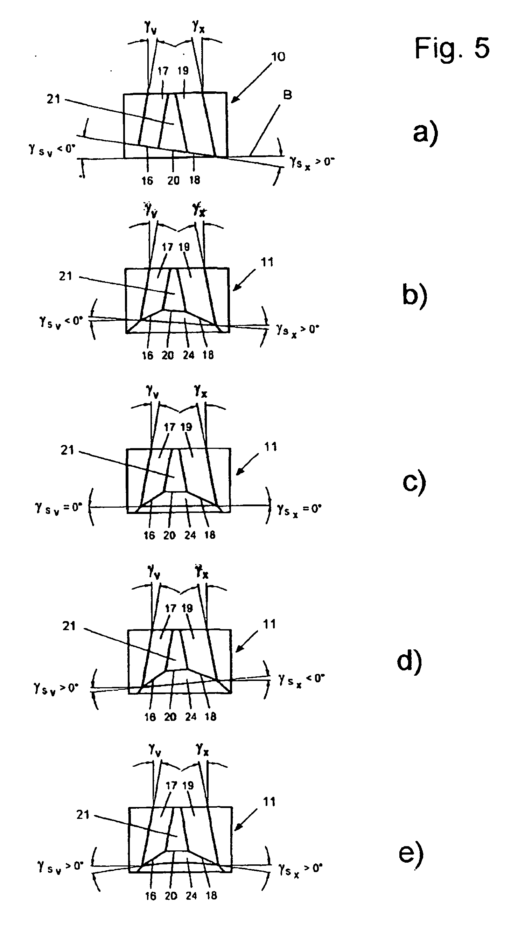

- Fig. 5: die Größe und Lage der Spanwinkel bei verschiedenen zur Erfindung und nicht zur Erfindung gehörenden Ausführungsformen des Stabmessers, und zwar in Fig. 5a für das Ausführungsbeispiel nach Fig. 1, in Fig. 5b für das Ausführungsbeispiel nach Fig. 2, in Fig. 5c für das Ausführungsbeispiel der Erfindung nach Fig. 3, in Fig. 5d für ein Ausführungsbeispiel, das zwar Fig. 2 entspricht, bei dem die Spanfläche jedoch umgekehrt gegen die Bezugsebene abgewinkelt ist, in Fig. 5e für das Ausführungsbeispiel nach Fig. 4 und in Fig. 5f für ein ansonsten nicht dargestelltes, nicht zur Erfindung gehörendes Ausführungsbeispiel mit zwei gegeneinander abgewinkelten Spanflächen,
- Fig. 6: eine bekannte Stabmessergruppe aus Außenmesser und Innenmesser im Eingriff mit einer Zahnlücke,
- Fig. 7: das Stabmesser nach der Erfindung im Eingriff mit einer Zahnlücke und
- Fig. 8: in Draufsicht zum Vergleich einen Messerkopf mit bekannten Stabmessern (Fig. 8a) und einen Messerkopf mit Stabmessern nach der Erfindung (Fig. 8b) jeweils bei der Bearbeitung eines Kegelrades im Einzelteilverfahren.

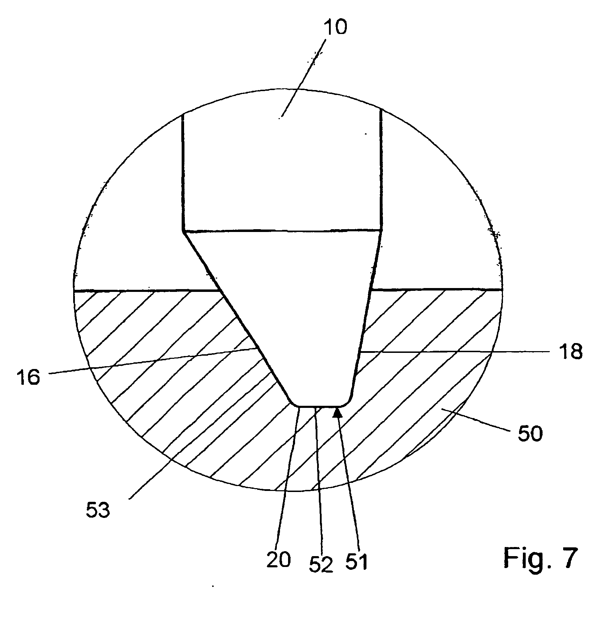

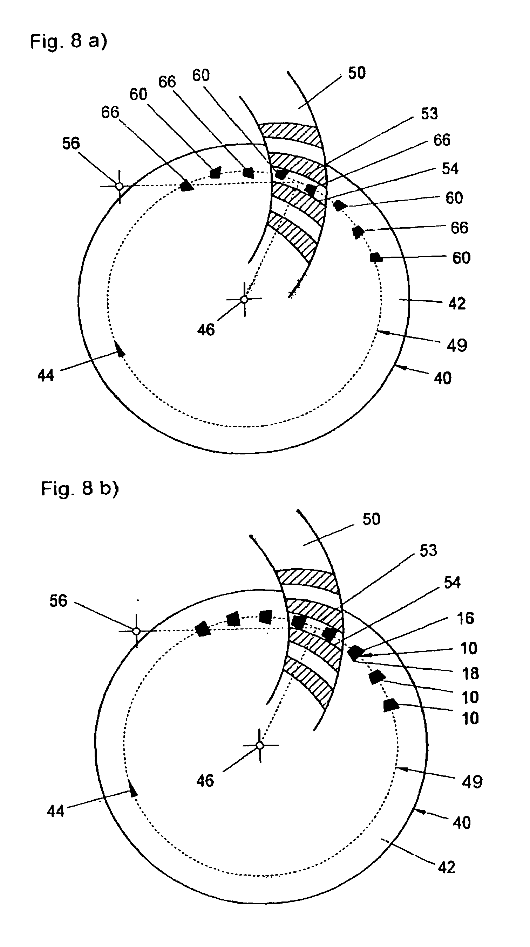

Fig. 1 zeigt ein insgesamt mit 10 bezeichnetes, nicht zur Erfindung gehörendes und bevorzugt aus Hartmetall bestehendes Stabmesser mit einem im Querschnitt rechteckigen Schaft 12. Das Stabmesser 10 hat an einem Ende 14, mit dem es im Einsatz aus einer Stirnfläche 42 eines Messerkopfes 40 (dargestellt in Fig. 8) hervorsteht, ein Schneidenprofil, das eine erste Schneide 16 für eine konkave Zahnflanke 53, eine zweite Schneide 18 für eine konvexe Zahnflanke 54 und eine Kopfschneide 20 für den Zahnlückengrund 52 einer Zahnlücke 51 eines Kegelrades 50 (dargestellt in Fig. 7) aufweist.

Zwischen der ersten Schneide 16 und der zweiten Schneide 18 erstreckt sich eine Spanfläche 22, die hier plan ist und beim Schärfen des Stabmessers 10 nicht nachgeschliffen wird. Durch den Schnitt der Spanfläche 22 mit zwei Freiflächen 17, 19 und einer Kopffläche 21 (Fig. 1c) wird das Schneidenprofil gebildet. Es können auch mehr als zwei Freiflächen und mehr als eine Kopffläche vorhanden sein, z.B. wenn diese Freiflächen jeweils noch eine Nebenfläche haben. Die erste und die zweite Schneide 16, 18 sind als Haupt- oder formgebende Schneiden zum vollständigen Schneiden der konkaven bzw. konvexen Flanke ausgebildet und die Kopfschneide 20 ist zum vollständigen Schneiden des Zahnlückengrundes 52 ausgebildet, so dass mit ein und demselben Stabmesser 10 in einem Fräsdurchgang die Zahnlücke 51 mit einer kompletten Endgeometrie erzeugbar ist. Mit Bezug auf die Fig. 7 und 8 wird ein Verfahren zum Fräsen von Spiralkegel- und Hypoidrädern weiter unten näher beschrieben.

Bei dem in Fig. 1 dargestellten Stabmesser 10 handelt es sich um ein sogenanntes 2-Flankenschliff- oder profilgeschärftes Stabmesser, bei dem die Spanfläche 22 unveränderlich in den Schaft 12 eingearbeitet ist, wie es aus Fig. 1 b ersichtlich ist.

Fig. 2 zeigt in gleichen Ansichten wie Fig. 1 ein nicht zur Erfindung gehörendes, sogenanntes 3-Flankenschliff- oder profilgeschärftes und formgeschliffenes Stabmesser 11, das eine nachzuschleifende Spanfläche 24 hat, die im Gegensatz zu der Spanfläche 22 nicht in den Schaft 12 hinein reicht. Diejenigen Teile des Stabmessers 11 nach Fig. 2, die mit entsprechenden Teilen des Stabmessers 10 nach Fig. 1 übereinstimmen, tragen die gleichen Bezugszahlen und brauchen hier nicht erneut beschrieben zu werden.

Fig. 3 zeigt als ein drittes Ausführungsbeispiel des Stabmessers ein 3-Flankenschliff- oder profilgeschärftes und formgeschliffenes Stabmesser 11 nach der Erfindung mit der nachzuschleifenden Spanfläche 24 in Vorderansicht (Fig. 3a) und in Draufsicht (Fig. 3b). Im Unterschied zu dem Ausführungsbeispiel nach Fig. 2, die für die Ausrichtung der Spanfläche 24 den allgemeinen Fall zeigt, betrifft das Ausführungsbeispiel nach Fig. 3 den Spezialfall, dass die Spanfläche 24 so ausgerichtet ist, dass die beiden Schneiden 16 und 18 symmetrische Verhältnisse erhalten und gleiche Spanwinkel γₛ (dargestellt in Fig. 5c) ergeben.

Unterschiedlich ist bei dem Stabmesser 11 nach Fig. 3 gegenüber dem Stabmesser 11 nach Fig. 2 der Spanwinkel γₛ, der gemäß der Darstellung in Fig. 5, auf die weiter unten noch näher eingegangen wird, zwischen der Spanfläche und einer Bezugsebene B (vgl. zum Beispiel die Darstellung in Fig. 5a) in einer Keilmessebene gemessen wird, wobei die Keilmessebene die Zeichenebene in den Fig. 1c, 2c, 3b, 4b und 5 ist. In Fig. 2 ist der Spanwinkel γₛ an der ersten und der zweiten Schneide 16, 18 jeweils ungleich 0°, hingegen in Fig. 3 jeweils gleich 0°.

Fig. 4 zeigt als ein viertes Ausführungsbeispiel des Stabmessers das nicht zur Erfindung gehörende 3-Flankenschliff- oder profilgeschärfte und formgeschliffene Stabmesser 11 mit einer nachzuschleifenden Spanfläche 26 in Vorderansicht (Fig. 4a) und in Draufsicht (Fig. 4b). Im Unterschied zu den anderen Ausführungsbeispielen ist hier die Spanfläche 26 zwischen der ersten und der zweiten Schneide 16, 18 konkav gekrümmt. In diesem Fall ergeben beide Schneiden 16, 18 einen positiven Spanwinkel.

Fig. 5 zeigt die Größe und die Lage der Spanwinkel yₛ bei verschiedenen zur Erfindung und nicht zur Erfindung gehörenden Ausführungsformen des Stabmessers, und zwar in Fig. 5a für das nicht zur Erfindung gehörende Stabmesser 10 nach Fig. 1, in Fig. 5b für das nicht zur Erfindung gehörende Stabmesser 11 nach Fig. 2, in Fig. 5c für das erfindunsggemäße Stabmesser 11 nach Fig. 3, in Fig. 5d für das nicht zur Erfindung gehörende Stabmesser 11, das zwar dem nach Fig. 2 entspricht, bei dem die Spanfläche 24 jedoch umgekehrt gegen die Bezugsebene B abgewinkelt ist, in Fig. 5e für das nicht zur Erfindung gehörende Stabmesser 11 nach Fig. 4 und in Fig. 5f für ein ansonsten nicht dargestelltes, nicht zur Erfindung gehörendes Stabmesser 11' mit zwei gegeneinander abgewinkelten Spanflächen 24v und 24s.

Die Fig. 5a, 5b und 5d zeigen den Darstellungen in den Fig. 1 bzw. 2 entsprechende, nicht zur Erfindung gehörende Stabmesser 10 bzw. 11, bei denen die erste und die zweite Schneide 16, 18 Spanwinkel yₛ haben, von denen einer > 0° und einer < 0° ist.

Die erste Schneide 16 schneidet die konkave Zahnflanke 53 und die zweite Schneide 18 schneidet die konvexe Flanke 54, weshalb die Spanwinkel an diesen beiden Schneiden gemäß den Darstellungen in Fig. 5 mit yₛᵥ bzw. yₛₓ bezeichnet sind. Bei dem Stabmesser nach Fig. 5a ist der Spanwinkel yₛᵥ < 0° und der Spanwinkel yₛₓ > 0°. Das gleiche gilt für die Spanwinkel des Stabmessers 11 nach Fig. 5b. Bei dem Stabmesser 11 nach Fig. 5d ist der Spanwinkel yₛᵥ >0° und der Spanwinkel yₛₓ < 0°.

Bei dem Stabmesser 11 nach Fig. 5c haben die erste Schneide 16 und die zweite Schneide 18 Spanwinkel yₛₓ bzw. yₛᵥ, die beide 0° betragen.

Bei dem Stabmesser 11 nach Fig. 5e, bei dem die Spanfläche 24 gekrümmt ist, haben die erste Schneide 16 und die zweite Schneide 18 Spanwinkel yₛᵥ bzw. yₛₓ, die beide > 0° sind.

Bei dem Stabmesser 11' nach Fig. 5f, bei dem die Spanfläche 24 aus zwei gegeneinander abgewinkelten Spanflächen 24v, 24x besteht, haben die erste Schneide 16, die durch den Schnitt der Freifläche 17 und Spanfläche 24v gebildet ist, und die zweite Schneide 18, die durch den Schnitt der Freifläche 19 mit der Spanfläche 24x gebildet ist, jeweils einen Spanwinkel yₛᵥ bzw. yₛₓ, der < 0° ist.

Allen in Fig. 5 gezeigten Ausführungsbeispielen ist gemeinsam, dass sich sehr geringe Spanwinkel ergeben, die in einem Bereich von 0 bis ± 10° liegen. Bei Spanwinkeln von 0° und bei negativen Spanwinkeln sollte das Stabmesser nach der Erfindung aus Hartmetall bestehen, da Werkzeugstahl bei solchen Spanwinkeln weniger verschleißgünstig ist.

Fig. 7 zeigt das Stabmesser 10 nach der Erfindung im Eingriff mit der Zahnlücke 51. Bei dem Schneiden der Zahnlücke 51 wird mit dem Schneidenprofil ein und desselben Stabmessers 10 in einem Fräsdurchgang die Zahnlücke 51 mit der kompletten Endgeometrie erzeugt. Ein Vergleich der Fig. 7 und 6 lässt ohne weiteres erkennen, dass das Stabmesser 10 die aus dem Außenmesser 60 und dem Innenmesser 66 bestehende bekannte Messergruppe ersetzt. Die Hauptschneiden 61v und 67x der bekannten Messergruppe sind durch entsprechende formgebende Schneiden 16 bzw. 18 ein und desselben Messers 10 ersetzt worden.

Fig. 8a zeigt in Draufsicht einen Messerkopf 40, aus dessen Stirnfläche 42 bekannte Stabmesser hervorstehen, und zwar Außenmesser 60 und Innenmesser 66. Die Messer 60 und 66 sind auf einem Kreis 49 angeordnet. Die Drehrichtung des Messerkopfes 40 ist durch einen Pfeil 44 angegeben. Der Messerkopf 42 dreht sich um eine Achse 46. Das Kegelrad 50 ist ein Tellerrad, das sich um eine Achse 56 dreht.

Fig. 8b zeigt zum Vergleich den Messerkopf 40 mit Stabmessern 10 nach der Erfindung. Die Stabmesser 10 könnten auch in einem Messerkranz nach Fig. 8a zusätzlich zu den Stabmessern 60, 66 vorgesehen sein. In Fig. 8a bearbeitet das Außenmesser 60 die konkave Zahnflanke 53 und das Innenmesser 66 bearbeitet die konvexe Flanke 54 der Zahnlücke 53. Fig. 6 ist eine Einzelheit der Darstellung in Fig. 8a und zeigt, dass die Messer 60, 66 auch den Zahnlückengrund 52 der Zahnlücke 51 bearbeiten. In den Fig. 8a und 8b wird das Kegelrad 50 im Einzelteilverfahren bearbeitet. Das bedeutet, dass die Zahnlücke 51 in einem Fräsdurchgang solange bearbeitet wird, bis sie ihre gewünschte Endgeometrie erreicht hat. Anschließend wird geteilt, das heißt das Kegelrad 50 um eine Zahnteilung weiter gedreht. Dann wird die nächste Zahnlücke 51 in einem weiteren Fräsdurchgang so lange bearbeitet, bis sie fertig gestellt ist, usw. In Fig. 8b wird mit ein und demselben Stabmesser 10 die Zahnlücke 51 mit der ersten und der zweiten Schneide 16 bzw. 18 des Stabmessers 10 an der konkaven bzw. konvexen Flanke 53 bzw. 54 und mit der Kopfschneide 20 am Zahnlückengrund 52 gemäß der Darstellung in Fig. 7 bearbeitet. Die erste und die zweite Schneide 16, 18 sind Haupt- oder formgebende Schneiden zum vollständigen Schneiden der konkaven bzw. konvexen Flanke 53 bzw. 54, so dass mit ein und demselben Stabmesser 10 in einem Fräsdurchgang die Zahnlücke 51 so lange bearbeitet wird, bis ihre komplette Endgeometrie erzeugt ist. Dann wird geteilt und in dem nächsten Fräsdurchgang die nächste Zahnlücke 51 mit der kompletten Endgeometrie erzeugt, usw. Die Stabmesser 10 sind dabei ebenfalls auf einem Kreis 49 angeordnet und stehen aus der Stirnfläche 42 des Messerkopfes 40 hervor.

Das Verfahren, das mit dem Messerkopf 40 und der Anordnung der Stabmesser 10 nach Fig. 8b durchgeführt wird, unterscheidet sich von dem bekannten Verfahren, das gemäß Fig. 8a durchgeführt wird, dadurch, dass bei dem Schneiden der Zahnlücke 51 mit dem Schneidenprofil ein und desselben Stabmessers 10 in einem Fräsdurchgang die Zahnlücke 51 mit der kompletten Endgeometrie erzeugt wird. Bei dem Verfahren nach Fig. 8b ist die Anzahl der an der Erzeugung der Verzahnung des Kegelrades 50 aktiv beteiligten Schneiden bei gleichem Messerkopf doppelt so hoch wie bei dem bekannten Verfahren. Das pro Stabmesser 10 abgetragene Spanvolumen ist deutlich höher als das pro bekanntem Messer 60 oder 66 abgetragene Spanvolumen, da bei dem Stabmesser 10 nach der Erfindung das gesamte in die Zahnlücke 51 eintauchende Profil an der Zerspanung beteiligt wird. Die Profilausführung des Stabmessers nach der Erfindung führt zu sehr geringen Spanwinkeln der formgebenden Schneiden 16, 18 und hierdurch zu extrem hohen Schnittkräften, die auf den heute zur Verfügung stehenden NC-Wälzfräsmaschinen aber keine Probleme bereiten.

In den Fig. 8a und 8b ist als Kegelrad jeweils ein Tellerrad gezeigt. In der in Fig. 5 gewählten Anordnung ist die linke Schneide 16 der konkaven Flanke und die rechte Schneide 18 der konvexen Flanke zugeordnet, die Zuordnung könnte je nach zu fräsendem Werkstück aber auch umgekehrt sein, z.B. wie in der Darstellung in Fig. 8.

Das Einsatzfeld der voll schneidenden Stabmesser nach der Erfindung ist zwar überwiegend das Einzelteil- oder Kreisbogenverfahren, die Stabmesser nach der Erfindung sind jedoch auch im kontinuierlichen Verfahren einsetzbar.

Da alle auf dem Messerkopf 40 eingesetzten Stabmesser 10 nach der Erfindung an der Erzeugung der Endgeometrie der Kegelradverzahnung beteiligt sind, bietet das Verfahren nach Fig. 8b gegenüber dem bekannten Verfahren nach Fig. 8a den Vorteil, dass die Bearbeitungszeit deutlich (bis zu 50 %) reduziert werden kann, bei deutlich geringerem Verschleiß des einzelnen Stabmessers.

### Bezugszeichenliste

- 10: Stabmesser
- 11: Stabmesser
- 11': Stabmesser
- 14: Ende
- 16: erste Schneide
- 17: Freifläche
- 18: zweite Schneide
- 19: Freifläche
- 20: Kopfschneide
- 21: Kopffläche
- 22: Spanfläche
- 24: Spanfläche
- 24v: Spanfläche
- 24x: Spanfläche
- 26: Spanfläche
- 40: Messerkopf
- 42: Stirnfläche
- 44: Drehrichtung des Messerkopfes
- 46: Achse
- 49: Kreis
- 50: Kegelrad
- 51: Zahnlücke
- 52: Zahnlückengrund
- 53: konkave Zahnflanke
- 54: konvexe Zahnflanke
- 55: Zahnflanke
- 56: Achse
- 60: Außenmesser
- 61v: Hauptschneide
- 61x: Nebenschneide
- 66: Innenmesser
- 67v: Nebenschneide
- 67x: Hauptschneide
- B: Bezugsebene
- yₛ: Spanwinkel
- yₛᵥ: Spanwinkel mit Bezug konkave Flanke
- yₛₓ: Spanwinkel mit Bezug konvexe Flanke

## Patentansprüche

1. Profilgeschärftes oder profilgeschärftes und zusätzlich formgesohliffenes Stabmesser(10,11,11') zum Fräsen von Spiralkegel- und Hypoidrädem,
mit einem Schaft (12) und mit einem an einem Ende (14) des Schafles (12) durch den Schnitt von wenigstens einer Spanfläche (24), wenigstens zwei Freiflächen (17, 19) und wenigstens einer Kopffläche (21) gebildeten Schneldenprofil, das für das Erzeugen einer Zahnlücke (51) eine erste Schneide (16) für eine erste Flanke (53), eine zweite Schneide (18) für wenigstens einen Abschnitt einer der ersten Flanke (53) gegenüberlegenden zweiten Flanke (54) und eine Kopfschneide (20) für wenigstens einen Abschnitt das Zahnlückengrundes (52) aufweist, wobei die erste und die zweite Schneide (16, 18) als Schneiden zum vollsländigen Schneiden der ersten bzw. zweiten Flankke (53,54) ausgebildet sind und die Kopfsohrielde (20) zum vollständigen Schneiden das Zahnlückengrundes (52) ausgebildet ist, so dass mit ein und demselben Stabmesser (10, 11, 11) in einem Fräsdurchgang die Zahnlücke (51) mit der kompielten Endgeometrie erzeugbar ist,
**dadurch gekennzeichnet, dass** das Schneidenprofil durch den Schnitt von ein und derselben Spanfläche (22, 24) mit wenigstens den, beiden Freiflächen (17, 19) und der Kopffläche (21) gebildet ist,
und dass beide Schneiden (16, 18) sehrgeringe Spanwinkel (γₛₓ, γₛᵥ) haben, die in einem Bereich von 0 bis -10° liegen.

## Claims

1. A profile-sharpened or profile-sharpened and additionally form-ground bar cutting blade (10, 11, 11') for milling spiral bevel gears and hypoid gears, with a shank (12) and with a cutting edge profile formed at one end (14) of the shank (12) by the intersection of at least one rake surface (24), at least two clearance surfaces (17, 19) and at least one top surface (21), said cutting edge profile including, for producing a tooth slot (51), a first cutting edge (16) for a first tooth flank (53), a second cutting edge (18) for at least a portion of the second tooth flank (54) opposite said first tooth flank (53), and a top cutting edge (20) for at least a portion of the bottom (52) of the tooth slot,
wherein the first and second cutting edges (16, 18) are designed as cutting edges for completely cutting the first and second tooth flanks (53, 54) and the top cutting edge (20) is designed for completely cutting the bottom (52) of the tooth slot, thus enabling the tooth slot (51) to be generated to its complete final geometry using one and the same bar cutting blade (10, 11, 11') in one milling pass,
**characterized in that** the cutting edge profile is formed by the intersection of one and the same rake surface (22, 24) with at least the two clearance surfaces (17, 19) and the top surface (21) and
that both cutting edges (16, 18) have very small rake angles (Yₛₓ, Yₛᵥ) which lie in a range of 0 to -10°.

## Revendications

1. Lame en forme de barre (10, 11, 11') à profil acéré, ou à profil acéré et en outre de forme meulée, pour le fraisage d'engrenages coniques à denture hélicoïdale et d'engrenages hypoïdes, comportant un corps (12) et, sur une extrémité (14) du corps (12), un profil tranchant formé par la découpe d'au moins une face de coupe (24), d'au moins deux faces de dépouille (17, 19) et d'au moins une face de tête (21), lequel profil tranchant comporte un premier tranchant (16) pour engendrer un entredent (51) pour un premier flanc (53), un deuxième tranchant (18) pour au moins un tronçon d'un deuxième flanc (54) opposé au premier flanc (53), et un tranchant de tête (20) pour au moins un tronçon du fond (52) d'entredent,
le premier et le deuxième tranchant (16, 18) étant agencés en tant que tranchants pour la taille complète du premier ou du deuxième flanc (53, 54) et le tranchant de tête (20) étant agencé pour la taille complète du fond (52) d'entredent, de sorte que l'entredent (51) puisse être engendré avec la géométrie finale complète en une passe de fraisage avec la seule et même lame en forme de barre (10, 11, 11'),
**caractérisée en ce que** le profil tranchant est formé par la découpe d'une et même face de coupe (22, 24) avec au moins les deux faces de dépouille (17, 19) et la face de tête (21) et
**en ce que** les deux tranchants (16, 18) ont des angles de coupe (Yₛₓ, Yₛᵥ) très faibles qui se situent dans une plage de 0 à -10°.
